# EUROPÄISCHE PATENTANMELDUNG

(11) **EP 2 455 631 A1**
(43) Veröffentlichungstag der Anmeldung: **23.05.2012**
(21) Anmeldenummer: 11007801.1
(22) Anmeldetag: 26.09.2011
(51) Int. Cl.: F16C 29/12

(54) **Führung für Bohrgerät**

(30) Priorität: 23.11.2010 DE 202010015655 U
(71) Anmelder: Vakuumtechnik Eibenstock GmbH, 08309 Eibenstock (DE)
(72) Erfinder: Lässig, Lothar, 08324 Bockau (DE)
(74) Vertreter: Köhler, Tobias

(57) **Zusammenfassung**

Die Erfindung betrifft eine Führung für Bohrgeräte, bestehend aus einer Säule (5), auf welcher ein Schlitten (1) die Säule (5) U-förmig umgreifend angeordnet ist, wobei an den seitlich umschlossenen Flächen die Führung durch in den Schlitten (1) eingelassene Transportkugeln (2, 3), die in in der Säule (5) ausgeprägten Laufbahnen mit dem entsprechenden Kugelradius laufen, realisiert ist und vorderseitig im Schlitten (1) eine Ritzelwelle (7) mit Lagern gelagert ist, die in die verzahnte Säule (5) eingreift und den Vorschub des Schlittens (1) auf der Säule (5) realisiert und im Schlitten (1) die Transportkugeln (2) auf der einen Seite bezüglich der Laufbahn in der Säule fest eingesetzt sind und auf der anderen gegenüberliegenden Seite die Transportkugeln (3) gleit- bzw. rollfähig in fest eingesetzten Bundbuchsen (6) angeordnet sind, wobei in den beiden Bundbuchsen (6) je eine Stellschraube (4) mit Kontermutter (8) zum Kontern gegen die Bundbuchse (6) angeordnet ist und die Stellschraube (4) am Boden der Fassung der Transportkugeln (3) anliegt.

## Beschreibung

Die Erfindung betrifft eine Führung von Werkzeugen, vorzugsweise Bohrgeräten, an Werkzeugführungen wie beispielsweise den sogenannten Bohrständer.

Sollen Handbohrmaschinen oder andere Bohrgeräte stationär nutzbar gemacht werden, ist der Einsatz eines Bohrständers unverzichtbar.

Bekannte Bohrständer bestehen im wesentlichen aus einer Bodenplatte mit Bohrauflage, einer stabilen, senkrechten Säule mit Zahnstange oder Zahnkerbung und einem auf der Säule beweglich gelagerten Schlitten, in den eine Bohrmaschine oder der zu bohrenden Fläche einzuspannen ist.

Durch einen Zahnradantrieb kann der Schlitten auf der Säule bewegt und positioniert werden. Eine Feder sorgt für die Rückstellung des Schlittens in die oberste Position.

Die Bodenplatte verfügt üblicherweise über Bohrungen, mittels derer der Bohrständer auf einer Werkbank befestigt werden kann.

Zum schnellen Fixieren auf ebenen und glatten Flächen wie Naturstein und Glas ist es auch bekannt, den Bohrständer mittels Vakuumsaugnäpfen präzise und werkzeuglos auch an engen Stellen zu positionieren. Diese Variante der Befestigung eignet sich besonders zum Bohren auf Treppen, Brüstungen sowie Glas- und Steinplatten.

Auch ist es bekannt, die Bohrständer mit einer integrierten Libelle als praktische Justierhilfe auszugestalten.

Die übliche Ausführung der bekannten Bohrständer als Säule mit Zahnstange oder Zahnkerbung und einem auf der Säule beweglich gelagerten Schlitten weist den Nachteil auf, dass die Toleranzen dieser Führung definiert werden durch die Toleranzen der Säule und des Schlittens.

Ein zusätzlicher Nachteil besteht darin, dass bei Beaufschlagung dieser Führung mit der beim Bohren erforderlichen Kraft, die Toleranzen der Säule und des Schlittens die maximale mögliche Abweichung realisiert und somit ungenaue Bohrbilder oder Vibrationen entstehen können.

Aufgabe der Erfindung ist es, eine Führung für vorzugsweise Bohrgeräte zu schaffen, mit welcher die bekannten Nachteile des Standes der Technik behoben werden.

Die Lösung der erfindungsgemäßen Aufgabe ergibt sich aus den kennzeichnenden Merkmalen des Anspruches 1 in Zusammenhang mit den Merkmalen des Oberbegriffes. Weitere vorteilhafte Ausgestaltungen der Erfindung ergeben sich aus den Unteransprüchen.

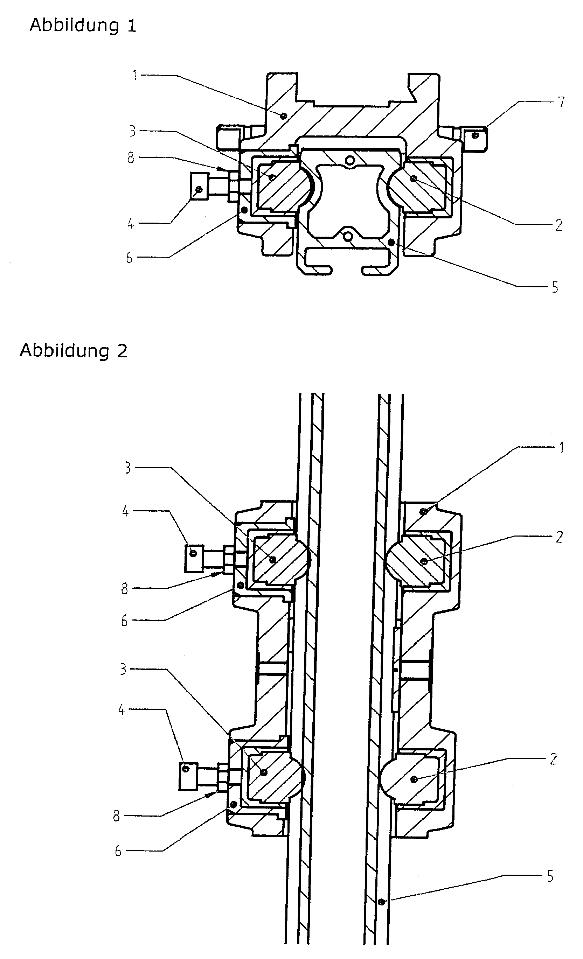

Nachfolgend soll die erfindungsgemäße Lösung anhand eines Ausführungsbeispiels und den Abbildungen 1 und 2. Dabei zeigt Abbildung 1 einen horizontalen Schnitt und Abbildung 2 einen vertikalen Schnitt durch die erfindungsgemäße Aufnahme.

Der Schlitten 1 der erfindungsgemäßen Aufnahme für ein Bohrgerät, mit welchem entlang einer Säule 5 ein Vorschub des Schlittens 1 ermöglicht wird, ist wie folgt ausgeführt und an einer Säule 5 montiert: Der Schlitten 1 umgreift die Säule 5 U-förmig, wobei an den seitlich umschlossenen Flächen die Führung durch in den Schlitten 1 eingelassene Transportkugeln 2, 3, die in den in der Säule 5 ausgeprägten Laufbahnen mit dem entsprechenden Kugelradius rollen, realisiert ist. Vorderseitig ist im Schlitten 1 eine Ritzelwelle 7 vorzugsweise mit Kugellagern gelagert, die in die vorderseitig verzahnte Säule 5 eingreift und durch Drehbewegung zum Beispiel mittels eines aufgesteckten Drehkreuzes den Vorschub des Schlittens 1 auf der Säule 5 gewährleistet. Um ein minimales Spiel der Führung zwischen Schlitten 1 und Säule 5 einzustellen, sind im Schlitten 1 die Transportkugeln 2 auf der einen Seite bezüglich der Laufbahn in der Säule fest eingesetzt und auf der anderen gegenüberliegenden Seite sind die Transportkugeln 3 gleitfähig in fest eingesetzten Bundbuchsen 6 angeordnet. In den beiden Bundbuchsen 6 ist je eine Stellschraube 4 mit Kontermutter 8 gegen die Bundbuchse 6 eingeschraubt. Die Stellschraube 4 liegt am Boden der Fassung der Transportkugeln 3 an. Beim Einschrauben der Stellschrauben 4 werden die Transportkugeln 3 in die Laufbahn der Säule 5 gedrückt. Ist eine Führung mit minimalem Spiel eingestellt, sichern die Kontermuttern 8 auf den Stellschrauben 4, gegen die Bundbuchsen 6 festgezogen, die Position.

## Patentansprüche

1. Führung für Bohrgerät, bestehend aus einer Säule (5), auf welcher ein Schlitten (1) die Säule (5) U-förmig umgreifend angeordnet ist, wobei an den seitlich umschlossenen Flächen die Führung durch in den Schlitten (1) eingelassene Transportkugeln (2, 3), die in in der Säule (5) ausgeprägten Laufbahnen mit dem entsprechenden Kugelradius laufen, realisiert ist und vorderseitig im Schlitten (1) eine Ritzelwelle (7) mit Lagern gelagert ist, die in die verzahnte Säule (5) eingreift und den Vorschub des Schlittens (1) auf der Säule (5) realisiert und im Schlitten (1) die Transportkugeln (2) auf der einen Seite bezüglich der Laufbahn in der Säule fest eingesetzt sind und auf der anderen gegenüberliegenden Seite die Transportkugeln (3) gleit- bzw. rollfähig in fest eingesetzten Bundbuchsen (6) angeordnet sind, wobei in den beiden Bundbuchsen (6) je eine Stellschraube (4) mit Kontermutter (8) zum Kontern gegen die Bundbuchse (6) angeordnet ist und die Stellschraube (4) am Boden der Fassung der Transportkugeln (3) anliegt.
